# EUROPÄISCHE PATENTANMELDUNG

(11) **EP 1 443 469 A1**
(43) Veröffentlichungstag der Anmeldung: **04.08.2004**
(21) Anmeldenummer: 04000888.0
(22) Anmeldetag: 16.01.2004
(51) Int. Cl.: G07C 9/00, B60R 25/00

(54) **Zugangskontrollsystem**

(30) Priorität: 31.01.2003 DE 10303960
(71) Anmelder: Delphi Technologies, Inc., Troy, MI 48007 (US)
(72) Erfinder: Suck, Jochen, 51674 Wiehl (DE)
(74) Vertreter: Manitz, Finsterwald & Partner GbR

(57) **Zusammenfassung**

Ein Zugangskontrollsystem insbesondere für Fahrzeuge umfasst eine zugangsseitige elektronische Steuereinrichtung und zumindest zwei benutzerseitige Identifikationseinrichtungen, wobei zwischen der elektronischen Steuereinrichtung einerseits und den Identifikationseinrichtungen andererseits Authentisierungssignale austauschbar sind und auf ein jeweiliges ausgesendetes Authentisierungsabfragesignal der Steuereinrichtung hin die Identifikationseinrichtungen zumindest unter vorgebbaren Bedingungen jeweils ein Authentisierungsantwortsignal aussenden. Die Identifikationseinrichtungen senden auf den Empfang eines jeweiligen Authentisierungsabfragesignals hin ihre betreffenden Authentisierungsantwortsignale in unterschiedlichen Zeitfenstern, die durch in den Identifikationseinrichtungen gespeicherte Vorgaben bestimmt sind.

## Beschreibung

Die Erfindung betrifft ein Zugangskontrollsystem insbesondere für Fahrzeuge, mit einer zugangsseitigen elektronischen Steuereinrichtung und zumindest zwei benutzerseitigen Identifikationseinrichtungen, wobei zwischen der elektronischen Steuereinrichtung einerseits und den Identifikationseinrichtungen andererseits Authentisierungssignale austauschbar sind und auf ein jeweiliges ausgesendetes Authentisierungsabfragesignal der Steuereinrichtung hin die Identifikationseinrichtungen zumindest unter vorgebbaren Bedingungen jeweils ein Authentisierungsantwortsignal aussenden.

Ein solches Zugangskontrollsystem kommt in der Regel dort zum Einsatz, wo es um die Überprüfung geht, ob eine jeweilige Person als Inhaber einer jeweiligen Identifikationseinrichtung autorisiert ist, die betreffende Zugangskontrolleinrichtung zu passieren. Dies gilt sowohl für ortsfeste Zugangskontrolleinrichtungen, zu denen nur ein ausgewählter Personenkreis Zutritt hat, als auch für mobile Zugangskontrolleinrichtungen, insbesondere bei Fahrzeugen, wie Kraftfahrzeugen, Schiffen oder Fahrrädern. Mit den betreffenden Zugangskontrolleinrichtungen soll hier einem Diebstahl des Fahrzeuges entgegen gewirkt werden. Ein jeweiliges Zugangskontrollsystem kann insbesondere als so genanntes schlüsselloses Zugangssystem und/oder schlüsselloses Startsystem für Fahrzeuge vorgesehen sein. Es umfasst in diesem Fall ein dem Fahrzeug zugeordnetes elektronisches Steuergerät, welches in der Regel dauerhaft mit Energie versorgt ist, und die mobilen Identifikationseinrichtungen, die einen jeweiligen autorisierten Benutzer identifizieren sollen. Dabei kann eine jeweilige Identifikationseinrichtung selbst Teil eines Fahrzeugschlüssels sein, der mit der Steuereinrichtung im Bereich der Schließ- und/oder Startanlage des Fahrzeuges in vorzugsweise bidirektionalem Datenaustausch steht. Die jeweiligen Identifikationseinrichtungen können insbesondere auch in Chipkarten oder dergleichen integriert und beispielsweise als Transponder ausgeführt sein. Solche Transponder weisen keine eigene Energieversorgung auf, sie werden vielmehr bei einer Annäherung der Identifikationseinrichtung an die Steuereinrichtung drahtlos mit Energie versorgt und im weiteren automatisch zur Übertragung der Authentisierungsantwortsignale angesprochen.

In der Praxis kann nicht ausgeschlossen werden, dass gleichzeitig mehrere Identifikationseinrichtungen in die Reichweite-der Steuereinrichtung gelangen und damit mehr oder weniger gleichzeitig angesprochen werden. In diesem Fall kann es nun aber zu Kollisionsproblemen kommen, die darauf zurückzuführen sind, dass verschiedene Identifikationseinrichtungen ihre jeweiligen Authentisierungsantwortsignale und/oder Fehlermeldungen gleichzeitig aussenden.

Bei einem aus der EP 0 923 054 A bekannten Zugangskontrollsystem der eingangs genannten Art werden die verschiedenen Identifikationseinrichtungen durch die elektronische Steuereinrichtung jeweils mit einer ergänzenden Identifikationselement-Adresse direkt angesprochen, um das Aussenden eines jeweiligen Authentisierungsantwortsignals auszulösen. Die Zeitpunkte, zu denen die verschiedenen Identifikationseinrichtungen ihre Authentisierungsantwortsignale senden, werden also von der elektronischen Steuereinrichtung vorgegeben. Durch diese werden die Identifikationseinrichtungen nacheinander adressiert, so dass auch die betreffenden Authentisierungsantwortsignale aufeinander folgen.

Bei einem aus der DE 196 22 720 A1 bekannten Zugangskontrollsystem für Fahrzeuge wird in der elektronischen Steuereinrichtung die Anzahl der von dieser Steuereinrichtung angelernten Identifikations- oder Schlüsseleinrichtungen gespeichert. Dieser in der Steuereinrichtung gespeicherte Zahlenwert wird bei jedem Schlüsselkontakt in einen weiteren, im jeweiligen Schlüssel vorhandenen Speicher eingelesen, so dass zumindest einer der rechtmäßigen Schlüsseleinrichtungen den aktuellen Wert entsprechend der Anzahl der angelernten Schlüssel erkennen lässt. Durch die Überprüfung dieses Zahlenwertes kann dann jederzeit festgestellt werden, ob bei einer eventuellen Verlustmeldung des Fahrzeuges sämtliche auf die Steuereinrichtung des Fahrzeuges angelernten Schlüssel übergeben worden sind.

Der Erfindung liegt die Aufgabe zugrunde, ein verbessertes Zugangskontrollsystem der eingangs genannten Art zu schaffen, bei dem eine Kollisionsgefahr infolge von von mehreren Identifikationseinrichtungen gleichzeitig ausgesandten Signalen auf möglichst einfache und zuverlässige Weise beseitigt ist.

Diese Aufgabe wird nach der Erfindung dadurch gelöst, dass die Identifikationseinrichtungen auf den Empfang eines jeweiligen Authentisierungsabfragesignals hin ihre betreffenden Authentisierungsantwortsignale in unterschiedlichen Zeitfenstern aussenden, die durch in den Identifikationseinrichtungen gespeicherte Vorgaben bestimmt sind.

Aufgrund dieser Ausbildung ist sichergestellt, dass die verschiedenen angesprochenen Identifikationseinrichtungen ihre jeweiligen Authentisierungsantwortsignale stets in unterschiedlichen Zeitfenstern aussenden, so dass Kollisionsprobleme ausgeschlossen sind. Die unterschiedlichen Zeitfenster werden hier durch die Identifikationseinrichtungen selbst vorgegeben. Der zeitliche Bezugspunkt zur Festlegung eines jeweiligen Zeitfensters ist jeweils der Zeitpunkt des Empfangs eines jeweiligen Authentisierungsabfragesignals von der elektronischen Steuereinrichtung. Von den verschiedenen Identifikationseinrichtungen werden die jeweiligen Authentisierungsantwortsignale dann zu unterschiedlichen Zeiten nach einem solchen Empfang eines jeweiligen Authentisierungsabfragesignals ausgesendet.

Bei einer bevorzugten praktischen Ausführungsform des erfindungsgemäßen Zugangskontrollsystems sind die unterschiedlichen Zeitfenster durch ein in den Identifikationseinrichtungen gespeichertes Antikollisionsprotokoll vorgegeben.

Von Vorteil ist insbesondere auch, wenn die Identifikationseinrichtungen unterschiedliche Kennungen besitzen und die unterschiedlichen Zeitfenster in Abhängigkeit von diesen Kennungen gewählt sind bzw. berechnet werden.

Bei einer zweckmäßigen praktischen Ausführungsform sind in der elektronischen Steuereinrichtung zur Berechnung der für das System erforderlichen Anzahl von Zeitfenstern die Kennungen und/oder die Anzahl sämtlicher dem jeweiligen System zugeordneter Identifikationseinrichtungen gespeichert. Insbesondere in diesem Fall ist es beispielsweise auch möglich, dass die Identifikationseinrichtungen durch die elektronische Steuereinrichtung angelernt werden.

Anstatt beispielsweise die Kennungen der Identifikationseinrichtungen lediglich eines Systems in der elektronischen Steuereinrichtung zu speichern, ist es beispielsweise auch möglich, in der elektronischen Steuereinrichtung die betreffenden Daten für mehrere Systeme bereit zu halten, wobei in der Steuereinrichtung dann beispielsweise auch verschiedene Schlüssel für ein jeweiliges Teilsystem gespeichert sein können. Bei einer zweckmäßigen praktischen Ausführungsform können in der elektronischen Steuereinrichtung also zur Berechnung der für verschiedene Teilsysteme jeweils erforderlichen Anzahl von Zeitfenstern die Kennungen und/oder die Anzahl der den jeweiligen Teilsystemen zugeordneten Identifikationseinrichtungen gespeichert sein. Eine solche Ausführung ist relativ flexibel und insbesondere für eine Serienfertigung geeignet. So sind entsprechende Ausführungen beispielsweise dort von Vorteil, wo das betreffende Fahrzeug einer Leasinggesellschaft gehört und in der betreffenden elektronischen Steuereinrichtung mehrere Schlüssel für ein jeweiliges schlüsselloses Fahrzeugzugangskontrollsystem gespeichert sind.

Das Zugangskontrollsystem arbeitet vorzugsweise nach den Challenge-Response-Verfahren. Einzelheiten dieses Verfahrens ergeben sich beispielsweise aus der EP 0 923 054 A2.

So ist beispielsweise eine solche Ausführung des Zugangskontrollsystems denkbar, bei der ein jeweiliges von der Steuereinrichtung ausgesandtes Authentisierungsabfragesignal eine Zufallszahl sowie ein durch eine Verschlüsselung dieser Zufallszahl entsprechend eines in der Steuereinrichtung gespeicherten Systemschlüssels erhaltenes Verschlüsselungsergebnis umfasst.

Eine jeweilige Identifikationseinrichtung kann aus der empfangenen Zufallszahl durch Verschlüsselung dieser Zufallszahl entsprechend eines in der Identifikationseinrichtung gespeicherten Systemschlüssels ein Verschlüsselungsergebnis berechnen und dieses mit dem empfangenen Verschlüsselungsergebnis vergleichen. Es ist beispielsweise jedoch auch eine solche Ausführung denkbar, bei der eine jeweilige Identifikationsseinrichtung aus dem empfangenen Verschlüsselungsergebnis durch Entschlüsselung dieses Verschlüsselungsergebnisses entsprechend eines in der Identifikationseinrichtung gespeicherten inversen Systemschlüssels eine Zufallszahl berechnet und diese mit der empfangenen Zufallszahl vergleicht.

Die jeweilige Identifikationseinrichtung kann dann nach festgestellter Übereinstimmung der beiden miteinander verglichenen Größen aus dem Verschlüsselungsergebnis oder der berechneten Zufallszahl durch weitere Verschlüsselung mittels eines in der Identifikationseinrichtung gespeicherten Schlüssels ein Authentisierungsantwortsignal erzeugen und dieses in dem betreffenden Zeitfenster aussenden. Vorteilhafterweise wird dann in der Steuereinrichtung aus dem in dieser erzeugten Verschlüsselungsergebnis bzw. Zufallszahl durch weitere Verschlüsselung mittels eines in der Steuereinrichtung gespeicherten Schlüssels ein Vergleichssignal erzeugt und dieses Vergleichssignal mit dem empfangenen Authentisierungsantwortsignal verglichen, um bei festgestellter Überseinstimmung den Zugang freizugeben.

Grundsätzlich ist jedoch auch eine solche Ausführung denkbar, bei der in der Steuereinrichtung das empfangene Authentisierungsantwortsignal mittels eines in der Steuereinrichtung gespeicherten inversen Schlüssels entschlüsselt und das erhaltene Verschlüsselungsergebnis bzw. Zufallszahl mit dem in der Steuereinrichtung erzeugten Verschlüsselungsergebnis bzw. Zufallszahl verglichen wird, um bei festgestellter Übereinstimmung den Zustand freizugeben.

Der der weiteren Verschlüsselung dienende Schlüssel kann beispielsweise wieder dem Systemschlüssel entsprechen.

Bei fehlender Übereinstimmung der in einer jeweiligen Identifikationseinrichtung miteinander verglichenen Größen sendet die betreffende Identifikationseinrichtung vorzugsweise kein Authentisierungsantwortsignal aus. Grundsätzlich kann in einem solchen Fall jedoch auch ein falsches Authentisierungsantwortsignal bzw. eine Fehlermeldung ausgesandt werden. In beiden Fällen ist eine Freigabe der betreffenden Zugangskontrolleinrichtung ausgeschlossen.

Bei einer zweckmäßigen praktischen Ausführungsform des erfindungsgemäßen Zugangskontrollsystems werden die Authentisierungssignale über eine bidirektionale Funkstrecke zwischen der Steuereinrichtung und den Identifikationseinrichtungen ausgetauscht. Grundsätzlich kann die betreffende Verbindung jedoch auch über einen entsprechenden Kontakt hergestellt werden, z.B. dann, wenn die Identifikationseinrichtungen in einem jeweiligen Fahrzeugschlüssel integriert sind. Auch bei Fahrzeugschlüsseln mit integrierten Identifikationseinrichtungen ist grundsätzlich jedoch auch ein Datenaustausch über eine bidirektionale Funkstrecke oder dergleichen möglich.

Die Identifikationseinrichtungen können beispielsweise als Transponder ausgeführt sein. Grundsätzlich sind jedoch auch andere Ausführungen z.B. mit Batteriespeisung denkbar. Es können auch elektronische Schlüssel oder CIDs (customer identification device) vorgesehen sein.

Wie bereits erwähnt, können die Identifikationseinrichtungen beispielsweise jeweils einem Fahrzeugschlüssel zugeordnet sein.

Mit dem vorzugsweise programmierbaren Systemschlüssel für ein jeweiliges, eine Steuereinrichtung sowie mehrere Identifikationseinrichtungen umfassendes Zugangskontrollsystem ist sichergestellt, dass nur die der jeweiligen Steuereinrichtung zugeordneten Identifikationseinrichtungen antworten bzw. korrekte Authentisierungsantwortsignale liefern. Nachdem die Zeitfenster vorzugsweise auf der Basis der jeweiligen Kennungen oder Adressen der Identifikationseinrichtungen gewählt oder berechnet werden, ist sichergestellt, dass die verschiedenen Identifikationseinrichtungen der zugeordneten Steuereinrichtung nacheinander antworten, so dass Störungen und Kollisionen vermieden werden. Mit der in der Steuereinrichtung gespeicherten Anzahl von einem betreffenden schlüssellosen Zugangskontrollsystem zugeordneten Identifikationseinrichtungen ist es möglich, die Zeitfenster für die Authentisierungsantwortsignale der Identifikationseinrichtungen zu variieren.

Die Erfindung wird im folgenden anhand eines Ausführungsbeispiels unter Bezugnahme auf die Zeichnung näher erläutert; in dieser zeigen:
- Figur 1: ein Funktionsschema einer beispielhaften Ausführungsform eines Zugangskontrollsystems und
- Figur 2: ein Diagramm zur Darstellung der zeitlichen Abfolge der verschiedenen von der elektronischen Steuereinrichtung und den Identifikationseinrichtungen des Zugangskontrollsystems ausgesandten Authentisierungssignale.

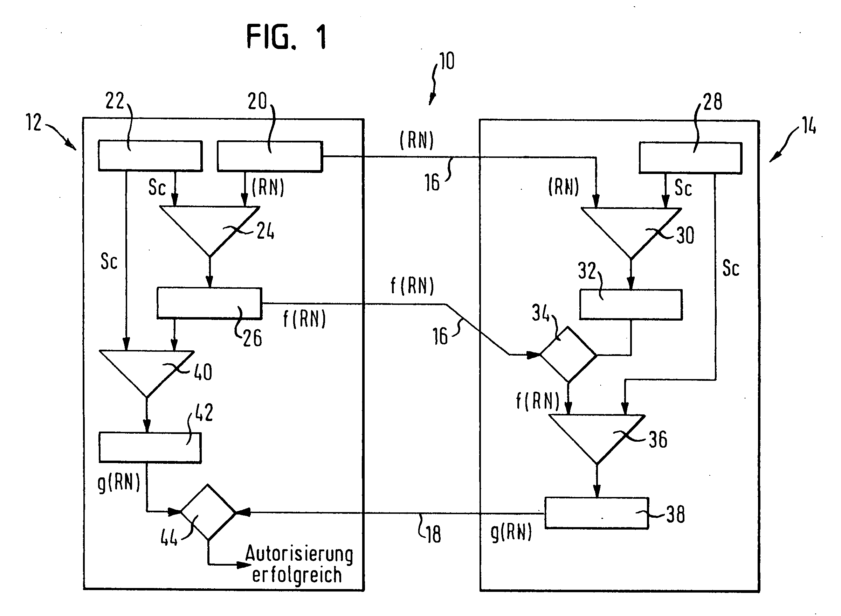

Figur 1 zeigt ein Funktionsschema einer beispielhaften Ausführungsform eines Zugangskontrollsystems 10, das z.B. für Fahrzeuge vorgesehen sein kann. Ein solches Zugangskontrollsystem 10 umfasst eine zugangsseitige elektronische Steuereinrichtung 12 und zumindest zwei benutzerseitige Identifikationseinrichtungen 14, von denen in der Figur 1 eine angedeutet ist.

Zwischen der elektronischen Steuereinrichtung 10 einerseits und den Identifikationseinrichtungen 14 andererseits können Authentisierungssignale ausgetauscht werden, wobei auf ein jeweiliges ausgesendetes Authentisierungsabfragesignal 16 der Steuereinrichtung 12 hin die Identifikationseinrichtungen 14 zumindest unter vorgebbaren Bedingungen jeweils ein Authentisierungsantwortsignal 18 aussenden.

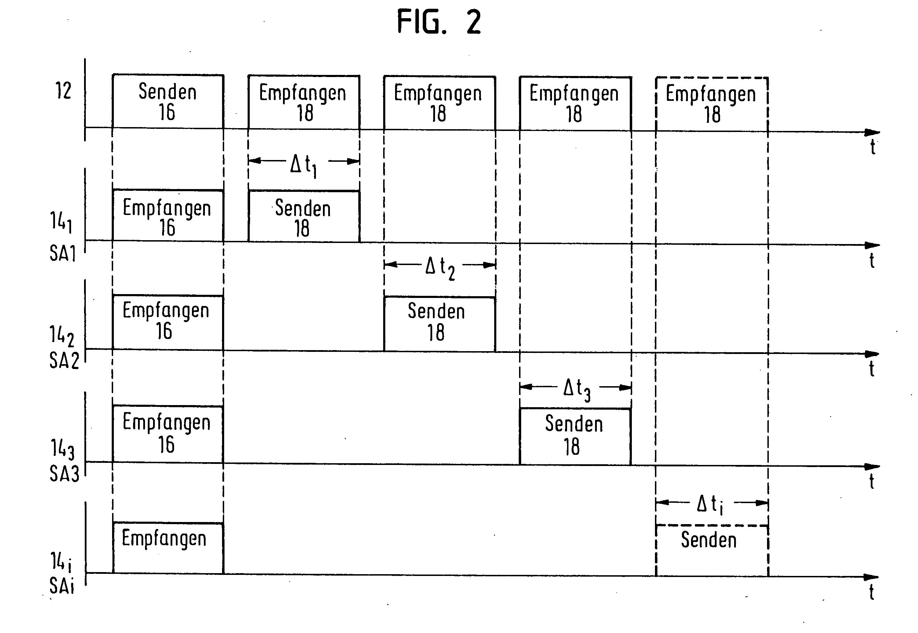

Die Arbeitsweise dieses Zugangskotrollsystems 10 basiert auf dem so genannten Challenge-Response-Verfahren, wie es beispielsweise in der EP 0 923 054 A2 beschrieben ist. Dabei ist das Zugangskontrollsystem 10 erfindungsgemäß jedoch so ausgelegt, dass die Identifikationseinrichtungen 14 auf den Empfang eines jeweiligen Authentisierungsabfragesignals 16 hin von sich aus ihre betreffenden Authentisierungsantwortsignale 18 in unterschiedlichen Zeitfenstern Δtᵢ (siehe auch Figur 2) aussenden, d.h. in Zeitfenstern die durch die Identifikationseinrichtungen 14 bestimmt oder berechnet werden bzw. durch in diesen Identifikationseinrichtungen 14 gespeicherte Vorgaben bestimmt sind. Dabei können die unterschiedlichen Zeitfenster Δtᵢ insbesondere durch ein in den Identifikationseinrichtungen 14 gespeichertes Antikollisionsprotokoll vorgegeben sein.

Im vorliegenden Fall besitzen die Identifikationseinrichtungen 14 unterschiedliche Kennungen oder Kurzadressen i, wobei die unterschiedlichen Zeitfenster Δtᵢ in Abhängigkeit von diesen Kennungen i berechnet werden bzw. gewählt sind.

Die Authentisierung als solche kann insbesondere nach dem so genannten Challenge-Response-Verfahren erfolgen, wie es beispielsweise in der EP 0 923 054 A2 beschrieben ist.

Im vorliegenden Fall umfasst ein jeweiliges von der Steuereinrichtung 12 ausgesandtes Authentisierungsabfragesignal 16 eine von einem Zufallszahlengenerator 20 der beispielsweise einem Schließsystem eines Fahrzeugs zugeordneten elektronischen Steuereinrichtung 12 erzeugte Zufallszahl RN sowie ein durch eine Verschlüsselung dieser Zufallszahl RN entsprechend eines in der Steuereinrichtung 12 in einem Speicher 22 gespeicherten Systemschlüssels Sc (secret key) erhaltenes Verschlüsselungsergebnis f (RN).

Die Berechnung und Bereitstellung des Verschlüsselungsergebnisses f (RN) erfolgt in den Stufen 24, 26 der elektronischen Steuereinrichtung 12.

Eine jeweilige Identifikationseinrichtung 14 berechnet aus der empfangenen Zufallszahl RN durch Verschlüsselung dieser Zufallszahl RN entsprechend eines in einem Speicher 28 der Identifikationseinrichtung 14 gespeicherten Systemschlüssels Sc (secret key) ein Verschlüsselungsergebnis f (RN) und vergleicht dieses mit dem empfangenen Verschlüsselungsergebnis f (RN). Das Verschlüsselungsergebnis f (RN) wird in den Berechnungsstufen 30, 32 der Identifikationseinrichtung 14 berechnet und bereitgestellt. Der Vergleich des berechneten Verschlüsselungsergebnisses mit dem empfangenen Verschlüsselungsergebnis erfolgt in der Vergleichsstufe 34 der Identifikationseinrichtung 14.

Nach festgestellter Übereinstimmung der beiden miteinander verglichenen Verschlüsselungsergebnisse f (RN) in der Vergleichsstufe 34 erzeugt die jeweilige Identifikationseinrichtung 14 in den Stufen 36, 38 aus dem Verschlüsselungsergebnis f (RN) durch weitere Verschlüsselung mittels eines in der Identifikationseinrichtung 14 gespeicherten Schlüssels, bei dem es sich insbesondere wieder um den Systemschlüssel Sc handeln kann, ein Endergebnis g (RN) zur Bildung eines Authentisierungsantwortsignal 18. Das Authentisierungsantwortsignal 18 wird dann in dem durch die betreffende Kennung der jeweiligen Identifikationseinrichtung 14 bestimmten Zeitfenster Δtᵢ ausgesendet.

In der elektronischen Steuereinrichtung 12 wird in den Stufen 40, 42 aus dem in der Steuereinrichtung 12 erzeugten Verschlüsselungsergebnis f(RN) durch weitere Verschlüsselung beispielsweise wieder durch den Systemschlüssel Sc ein Vergleichssignal g (RN) erzeugt und bereitgestellt, das dann in der Vergleichsstufe 44 mit dem empfangenen Authentisierungsantwortsignal 18 verglichen wird. Bei festgestellter Übereinstimmung wird dann der Zugang freigegeben.

Bei fehlender Übereinstimmung der in einer jeweiligen Identifikationseinrichtung 14 miteinander verglichenen Größen sendet die betreffende Identifikationseinrichtung 14 vorzugsweise kein Authentisierungsantwortsignal aus. Grundsätzlich kann in einem solchen Fall jedoch auch ein falsches Authentisierungsantwortsignal ausgesendet werden. Auch ein solches falsches Authentisierungsantwortsignal wird wieder in einem bestimmten Zeitfenster ausgesendet, das z.B. durch ein in den Identifikationseinrichtungen 14 gespeichertes Antikollisionsprotokoll vorgegeben ist, um Kollisionen zu vermeiden. In beiden Fällen ist eine Freigabe der betreffenden Zugangskontrolleinrichtung ausgeschlossen.

Die Authentisierungssignale 16, 18 können beispielsweise über eine bidirektionale Funkstrecke zwischen der Steuereinrichtung 12 und den Identifikationseinrichtungen 14 ausgetauscht werden. Die Identifikationseinrichtungen 14 können jeweils beispielsweise als Transponder ausgeführt sein. Sie können beispielsweise jeweils einem Fahrzeugschlüssel zugeordnet sein.

Figur 2 zeigt ein Diagramm zur Darstellung einer zeitlichen Abfolge der verschiedenen von der elektronischen Steuereinrichtung 12 und den Identifikationseinrichtungen 14 des Zugangskontrollsystems 10 ausgesandten Authentisierungssignale 16, 18.

Danach sendet die Steuereinrichtung 12 ein Authentisierungsabfragesignal 16 aus. Dieses Authentisierungsabfragesignal 16 wird dann von den verschiedenen Identifikationseinrichtungen 14, hier den Identifikationseinrichtungen 14₁, 14₂, 14₃, 14ᵢ ...mit den Kennungen oder Kurzadressen SA1, SA2, SA3, SAi ... empfangen.

Nachdem die verschiedenen Identifikationseinrichtungen 14 angesprochen wurden, antworten diese normalerweise automatisch. Sie können also insbesondere als Transponder ausgeführt sein, wie dies beispielsweise in der EP 0 923 054 A2 beschrieben ist. Das vorliegende Zugangskontrollsystem basiert nun aber nicht nur auf einem Systemschlüssel (system key) wie das aus der EP 0 923 054 A2 bekannte System, sondern überdies auf einem von der Kennung oder Kurzadresse der jeweiligen Identifikationseinrichtungen 14 abhängigen Schlüssel. Die Kennung einer jeweiligen Identifikationseinrichtung 14 kann der Nummer entsprechen, die die Identifikationseinrichtung 14 in einem schlüssellosen Fahrzeug-Zugangskontrollsystem besitzt.

Wie bereits anhand der Figur 1 erläutert, kann das von der elektronischen Steuereinrichtung 12 ausgesendete Authentisierungsabfragesignal 16 eine Zufallszahl RN sowie ein aus dieser Zufallszahl und dem Systemschlüssel Sc berechnetes Verschlüsselungsergebnis f (RN) umfassen. Eine jeweilige Identifikationseinrichtung 14 berechnet dann anhand der empfangenen Zufallszahl RN ihr eigenes Verschlüsselungsergebnis f (RN). Daraufhin erfolgt in der jeweiligen Identifikationseinrichtung 14 ein Vergleich des empfangenen Verschlüsselungsergebnisses f (RN) mit dem berechneten Verschlüsselungsergebnis f (RN). Ergibt sich anhand dieses Vergleichs nun kein Unterschied, so berechnet die jeweilige Identifikationseinrichtung 14 das Endergebnis g (RN), das dann als Authentisierungsantwortsignal 18 an die elektronische Steuereinrichtung 12 zurückgesendet wird.

Ergeben sich anhand des Vergleichs Unterschiede zwischen dem empfangenen Verschlüsselungsergebnis f (RN) und dem berechneten Verschlüsselungsergebnis f (RN), so sendet die Identifikationseinrichtung 14 vorzugsweise kein Authentisierungsantwortsignal 18 an die elektronische Steuereinrichtung 12. Die Identifikationseinrichtung 14 schaltet dann ab. Bei fehlender Übereinstimmung der miteinander zu vergleichenden Größen kann die betreffende Identifikationseinrichtung 14 jedoch auch ein falsches Authentisierungsantwortsignal an die elektronische Steuereinrichtung 12 senden, woraufhin die Steuereinrichtung 12 erkennt, dass ein nicht autorisierter Schlüssel vorliegt. In beiden Fällen unterbleibt eine Freigabe der betreffenden Zugangskontrolleinrichtung bzw. Schließeinrichtung.

Liefert eine jeweilige Identifikationseinrichtung 14 ein berechnetes Ergebnis g (RN), so wird das Zeitfenster für das entsprechende auszusendende Authentisierungsausgangssignal 18 aus der Kennung oder Kurzadresse der Identifikationseinrichtung 14 berechnet. Ist der Identifikationseinrichtung 14 beispielsweise die System-Nummer "5" zugeordnet bzw. handelt es sich um die fünfte Identifikationseinrichtung 14 des Zugangskontrollsystems, so wird das betreffende Authentisierungsantwortsignal 18 im fünften Zeitfenster an die elektronische Steuereinrichtung 12 zurückgesendet.

Wie anhand der Figur 2 zu erkennen ist, sendet die Identifikationseinrichtung 14₁ mit der Kennung SA1 ein entsprechendes Authentisierungsantwortsignal 18 in dem Zeitfenster Δt₁. Entsprechend wird dieses Authentisierungsantwortsignal 18 von der elektronischen Steuereinrichtung 12 in einem solchen Zeitfenster Δt₁ empfangen. Die Identifikationseinrichtung 14₂ mit der Kennung SA2 sendet ihr Authentisierungsantwortsignal 18 in einem Zeitfenster Δt₂. Entsprechend empfängt die elektronische Steuereinrichtung 12 dieses Authentisierungsantwortsignal 18 in einem solchen Zeitfenster Δt₂. Die Identifikationseinrichtung 14₃ mit der Kennung SA3 sendet ihr Authentifizierungsantwortsignal 18 in einem Zeitfenster Δt₃. Entsprechend empfängt die elektronische Steuereinrichtung 12 dieses Authentisierungsantwortsignal 18 in einem solchen Zeitfenster Δt₃. Allgemein sendet also eine Identifikationseinrichtung 14ᵢ mit der Kennung SAi ihr Authentisierungsantwortsignal 18 in einem Zeitfenster Δtᵢ. Dieses Authentisierungsantwortsignal 18 wird von der elektronischen Steuereinrichtung 12 entsprechend in dem betreffenden Zeitfenster Δtᵢ empfangen.

In der elektronischen Steuereinrichtung 12 kann auch die Anzahl aller Kennungen oder Kurzadressen der zu einem einzigen System gehörenden Identifikationseinrichtungen 14 gespeichert sein, um die Anzahl von Zeitfenstern individuell für jedes System berechnen zu können. Eine äußerst flexible Ausführung erhält man, wenn diese Art von Daten im Speicher der elektronischen Steuereinrichtung 12 für eine Serienproduktion gespeichert sind. Beispielsweise in dem Fall, dass das betreffende Fahrzeug einer Leasinggesellschaft gehört, können z.B. mehrere Schlüssel für ein schlüsselloses Fahrzeug-Zugangskontrollsystem gespeichert werden. Die Steuereinrichtung 12 kann über sämtliche ihr zugeordnete Identifikationseinrichturigen innerhalb der bestimmten Bereiche des Fahrzeugs unterrichtet sein und kann die weitere Kommunikation mit einer berechtigten Identifikationseinrichtung aufnehmen.

Mit dem vorzugsweise programmierbaren geheimen Systemschlüssel (secret key) für ein jeweiliges eine Steuereinrichtung und die zugehörigen Identifikationseinrichtungen umfassendes System ist sichergestellt, dass nur die der betreffenden Steuereinrichtung zugeordneten Identifikationseinrichtungen antworten bzw. korrekt antworten. Mit der Berechnung oder Festlegung der für die Authentisierungsantwortsignale bestimmten Zeitfenster auf der Basis der Kennungen oder Adressen der Identifikationseinrichtungen ist sichergestellt, dass die betreffenden Identifikationseinrichtungen ihrer Steuereinrichtung nacheinander antworten, wodurch Störungen und Kollisionen zwischen den verschiedenen Identifikationseinrichtungen eines jeweiligen Systems vermieden werden. Mit den im Speicher der elektronischen Steuereinrichtung gespeicherten Informationen bezüglich der Anzahl von zu einem schlüssellosen Fahrzeug-Zugangskontrollsystem gehörenden Identifikationseinrichtungen ist es möglich, die Zeitfenster für die Authentisierungsantwortsignale der Identifikationseinrichtungen an die Steuereinrichtung zu variieren.

Im übrigen kann das beschriebene Zugangskontrollsystem beispielsweise so ausgeführt sein, wie dies in der EP 0 923 054 A2 beschrieben ist.

### Bezugszeichenliste

- 10: Zugangskontrollsystem
- 12: elektronische Steuereinrichtung
- 14: Identifikationseinrichtung
- 16: Authentisierungsabfragesignal
- 18: Authentisierungsantwortsignal
- 20: Zufallsgenerator
- 22: Speicher
- 24: Stufe
- 26: Stufe
- 28: Speicher
- 30: Stufe
- 32: Stufe
- 34: Vergleichsstufe
- 36: Stufe
- 38: Stufe
- 40: Stufe
- 42: Stufe
- 44: Vergleichsstufe

- f (RN): Verschlüsselungsergebnis
- g (RN): Endergebnis, Vergleichsgröße
- Δtᵢ: Zeitfenster
- RN: Zufallszahl
- Sc: Systemschlüssel

## Patentansprüche

1. Zugangskontrollsystem (10) insbesondere für Fahrzeuge, mit einer zugangsseitigen elektronischen Steuereinrichtung (12) und zumindest zwei benutzerseitigen Identifikationseinrichtungen (14), wobei zwischen der elektronischen Steuereinrichtung (10) einerseits und den Identifikationseinrichtungen (14) andererseits Authentisierungssignale austauschbar sind und auf ein jeweiliges ausgesendetes Authentisierungsabfragesignal (16) der Steuereinrichtung (12) hin die Identifikationseinrichtungen (14) zumindest unter vorgebbaren Bedingungen jeweils ein Authentisierungsantwortsignal (18) aussenden,
**dadurch gekennzeichnet,**
**dass** die Identifikationseinrichtungen (14) auf den Empfang eines jeweiligen Authentisierungsabfragesignals (16) hin ihre betreffenden Authentisierungsantwortsignale (18) in unterschiedlichen Zeitfenstern (Δtᵢ) aussenden, die durch in den. Identifikationseinrichtungen (14) gespeicherte Vorgaben bestimmt sind.

2. Zugangskontrollsystem nach Anspruch 1,
**dadurch gekennzeichnet,**
**dass** die unterschiedlichen Zeitfenster (Δtᵢ) durch ein in den Identifikationseinrichtungen (14) gespeichertes Antikollisionsprotokoll vorgegeben sind.

3. Zugangskontrollsystem nach Anspruch 1 oder 2,
**dadurch gekennzeichnet,**
**dass** die Identifikationseinrichtungen (14) unterschiedliche Kennungen (i) besitzen und dass die unterschiedlichen Zeitfenster (Δtᵢ) in Abhängigkeit von diesen Kennungen gewählt sind.

4. Zugangskontrollsystem nach einem der vorhergehenden Ansprüche,
**dadurch gekennzeichnet,**
**dass** in der elektronischen Steuereinrichtung zur Berechnung der für das System erforderlichen Anzahl von Zeitfenstern die Kennungen und/oder die Anzahl sämtlicher dem jeweiligen System zugeordneter Identifikationseinrichtungen gespeichert sind.

5. Zugangskontrollsystem nach einem der vorhergehenden Ansprüche,
**dadurch gekennzeichnet,**
**dass** in der elektronischen Steuereinrichtung zur Berechnung der für verschiedene Teilsysteme jeweils erforderlichen Anzahl von Zeitfenstern die Kennungen und/oder die Anzahl der den jeweiligen Teilsystemen zugeordneten Identifikationseinrichtungen gespeichert sind.

6. Zugangskontrollsystem nach einem der vorhergehenden Ansprüche,
**dadurch gekennzeichnet,**
**dass** es nach dem Challenge-Response-Verfahren arbeitet.

7. Zugangskontrollsystem nach einem der vorhergehenden Ansprüche,
**dadurch gekennzeichnet,**
**dass** ein jeweiliges von der Steuereinrichtung (12) ausgesandtes Authentisierungsabfragesignal (16) eine Zufallszahl (RN) sowie ein durch eine Verschlüsselung dieser Zufallszahl (RN) entsprechend eines in der Steuereinrichtung (12) gespeicherten Systemschlüssels (Sc) erhaltenes Verschlüsselungsergebnis (f RN)) umfasst.

8. Zugangskontrollsystem nach einem der vorhergehenden Ansprüche,
**dadurch gekennzeichnet,**
**dass** eine jeweilige Identifikationseinrichtung (14) aus der empfangenen Zufallszahl (RN) durch Verschlüsselung dieser Zufallszahl (RN) entsprechend eines in der Identifikationseinrichtung (14) gespeicherten Systemschlüssels ein Verschlüsselungsergebnis (f(RN)) berechnet und dieses mit dem empfangenen Verschlüsselungsergebnis (f(RN)) vergleicht.

9. Zugangskontrollsystem nach einem der vorhergehenden Ansprüche,
**dadurch gekennzeichnet,**
**dass** eine jeweilige Identifikationseinrichtung (14) aus dem empfangenen Verschlüsselungsergebnis (f(RN)) durch Entschlüsselung dieses Verschlüsselungsergebnisses (f(RN)) entsprechend eines in der Identifikationseinrichtung (14) gespeicherten inversen Systemschlüssels eine Zufallszahl (RN) berechnet und diese mit der empfangen Zufallszahl (RN) vergleicht.

10. Zugangskontrollsystem nach Anspruch 8 oder 9,
**dadurch gekennzeichnet,**
**dass** die Identifikationseinrichtung (14) nach festgestellter Übereinstimmung der beiden miteinander verglichenen Größen aus dem Verschlüsselungsergebnis (f(RN)) oder der berechneten Zufallszahl (RN) durch weitere Verschlüsselung mittels eines in der Identifikationseinrichtung (14) gespeicherten Schlüssels (Sc) ein Authentisierungsantwortsignal (18) erzeugt und dieses in dem betreffenden Zeitfenster (Δtᵢ) aussendet.

11. Zugangskontrollsystem nach Anspruch 10,
**dadurch gekennzeichnet,**
**dass** in der Steuereinrichtung (12) aus dem in dieser erzeugten Verschlüsselungsergebnis (f(RN)) bzw. Zufallszahl (RN) durch weitere Verschlüsselung mittels eines in der Steuereinrichtung gespeicherten Schlüssels ein Vergleichssignal erzeugt und dieses Vergleichssignal mit dem empfangenen Authentisierungsantwortsignal verglichen wird, um bei festgestellter Übereinstimmung den Zugang freizugeben.

12. Zugangskontrollsystem nach Anspruch 10,
**dadurch gekennzeichnet,**
**dass** in der Steuereinrichtung (12) das empfangene Authentisierungsantwortsignal (18) mittels eines in der Steuereinrichtung (12) gespeicherten inversen Schlüssels entschlüsselt und das erhaltene Verschlüsselungsergebnis (f(RN)) bzw. Zufallszahl (RN) mit dem in der Steuereinrichtung (12) erzeugten Verschlüsselungsergebnis (f(RN)) bzw. Zufallszahl (RN) verglichen wird, um bei festgestellter Übereinstimmung den Zugang freizugeben.

13. Zugangskontrollsystem nach einem der Ansprüche 10 bis 12,
**dadurch gekennzeichnet,**
**dass** der der weiteren Verschlüsselung dienende Schlüssel dem Systemschlüssel (Sc) entspricht.

14. Zugangskontrollsystem nach einem der vorhergehenden Ansprüche,
**dadurch gekennzeichnet,**
**dass** bei fehlender Übereinstimmung der in einer jeweiligen Identifikationseinrichtung (14) miteinander verglichenen Größen die betreffende Identifikationseinrichtung (14) kein oder in dem betreffenden Zeitfenster (Δtᵢ) ein falsches Authentisierungsantwortsignal aussendet.

15. Zugangskontrollsystem nach einem der vorhergehenden Ansprüche,
**dadurch gekennzeichnet,**
**dass** die Authentisierungssignale (16, 18) über eine bidirektionale Funkstrecke zwischen der Steuereinrichtung (12) und den Identifikationseinrichtungen (14) austauschbar sind.

16. Zugangskontrollsystem nach einem der vorhergehenden Ansprüche,
**dadurch gekennzeichnet,**
**dass** die Identifikationseinrichtungen (14) jeweils als Transponder ausgeführt sind.

17. Zugangskontrollsystem nach einem der vorhergehenden Ansprüche,
**dadurch gekennzeichnet,**
**dass** die Identifikationseinrichtungen (14) jeweils einem Fahrzeugschlüssel zugeordnet sind.
